# EUROPEAN PATENT SPECIFICATION

(11) **EP 0 747 253 B1**
(45) Date of publication and mention of the grant of the patent: **14.01.2004**
(21) Application number: 96109095.8
(22) Date of filing: 05.06.1996
(51) Int. Cl.: B60K 5/04, F02B 19/08

(54) **Vehicle mounting configuration for two-cycle diesel engines**
Montageanordnung von Zweitaktdieselbrennkraftmaschinen in einem Fahrzeug
Configuration de montage de moteurs diesel à deux temps dans un véhicule

(30) Priority: 05.06.1995 JP 13789195
(43) Date of publication of application: 11.12.1996
(73) Proprietor: YAMAHA HATSUDOKI KABUSHIKI KAISHA, Iwata-shi Shizuoka-ken, 438 (JP)
(72) Inventor: Masuda, Tatsuyuki, Iwata-shi, Shizuoka-ken, 438 (JP); Miyamoto, Masanori, Iwata-shi, Shizuoka-ken, 438 (JP)
(74) Representative: Grünecker, Kinkeldey, Stockmair & Schwanhäusser Anwaltssozietät

(56) References cited:
- EP-A- 0 636 773
- US-A- 5 005 534

## Description

### Area of Industrial Utility

The present invention concerns a vehicle mounting configuration for two-cycle diesel engines that is used to mount two-cycle diesel engines having vortex auxiliary combustion chambers in vehicles.

### Prior Art

In the past, some four-cycle diesel engines having a vortex auxiliary combustion chamber had connecting holes between the main combustion chambers and the vortex auxiliary combustion chambers (referred to below simply as "auxiliary combustion chambers") which were sloped with respect to the cylinder axis, in a manner such that the holes extended in parallel to the inner walls of the auxiliary combustion chamber. In such engines, during the compression stroke, air would flow from the main combustion chamber through the foregoing connecting hole into the auxiliary combustion chamber which caused a vortex to be generated in the air compressed inside the auxiliary combustion chamber. The injecting of fuel into this vortex flow caused combustion to occur.

Since the injection of fuel into this vortex flow resulted in good fuel mixing and in high speed combustion, such engines were often employed in compact high-speed equipment and in passenger vehicles.

### Problems To Be Resolved by this Invention

The present inventors planned on reducing the size of the engines mounted in passenger vehicles by replacing the above described four-cycle diesel engines with two-cycle diesel engines, but there were problems in locating the auxiliary combustion chambers.

To wit, since there is an opening in the cylindrical wall surface for the exhaust port in two-cycle diesel engines, in order to prevent the high pressure combustion gas from flowing from the auxiliary combustion chamber through the connection hole to the main combustion chamber directly toward this exhaust port, thereby resulting in diminished utilization of its pressure, it was necessary to determine an appropriate direction for extension of the foregoing connection hole. Specifically, it was necessary to move the auxiliary combustion chamber in the cylinder head toward the exhaust side with respect to the cylinder axis, and to extend the connecting hole tangentially from the inside wall surface of the auxiliary combustion chamber downstream in a direction that gradually diverged from the exhaust side.

The prior art document EP 0.636.773 shows such an engine.

By locating the auxiliary combustion chambers more toward the exhaust side with respect to the cylinder axis, the heat distribution would cause the cylinder's exhaust side to heat to higher temperatures than the area between the cylinder axis and the opposite side. If this discrepancy in heat distribution were to become excessive, it could cause deformation of the cylinder due to heat stress.

Further, even if the flow direction for the combustion gas was set so that the flow from the auxiliary combustion chamber to the main combustion chamber was not directed toward the exhaust port, depending upon the direction of rotation of the crank shaft, during the initial period of the expansion stroke, the flow could pass through the small gap between the cylindrical wall surface and the piston, thereby causing the combustion gas to flow toward the exhaust port. The reason for this phenomenon is the shaking movement of the piston when it reaches the top dead point.

This shaking movement of the piston, which has a center of gravity that is above the piston pin, is caused by the shifting of the pressure being applied to the piston from one side, with respect to the cylinder axis, to the other side at the top dead point. When the shaking movement occurs, a gap develops between the cylindrical wall surface and the circumferential surface of the piston. When this gap develops on the exhaust port side, the combustion gas can flow toward the exhaust port side. Further, when the combustion gas enters the foregoing gap, it can cause carbon deposits to build up on the piston rings and on the ring grooves in the pistons.

The present invention seeks to resolve the foregoing problems in achieving more compact vehicles by means of mounting two-cycle diesel engines having vortex auxiliary combustion chambers in such vehicles: its objectives are to allow for virtually uniform heat distribution around the cylinder and the prevention of combustion gas infiltration to the area of the piston rings, even when the piston undergoes shaking movement.

### Means Used To Resolve Problems

The first invention concerns a vehicle mounting configuration for two-cycle diesel engines having a vortex auxiliary combustion chamber, which is characterized by the vehicle mounting configuration for two-cycle engines, wherein each of the foregoing vortex auxiliary combustion chambers is located on the exhaust side with respect to the cylinder axis of the cylinder; by the connecting hole between this auxiliary combustion chamber and the main combustion chamber being formed so that its axis is directed toward the side opposite the exhaust port; and moreover, during the expansion stroke, by the direction of rotation of the crankshaft being such that force is exerted on the piston toward the side opposite the foregoing exhaust port with respect to the cylinder axis, wherein this engine is mounted, with its crankshaft oriented transversely, in the front of a vehicle with the foregoing exhaust side facing the front of the vehicle, and the fuel pump, which supplies fuel to the foregoing auxiliary combustion chamber being located to the rear of the cylinder.

The second invention concerns a vehicle mounting configuration for two-cycle diesel engines according to Claim 1 which is characterized by an amount of oil depending upon the operating state of the engine being supplied under pressure from the oil tank by an oil pump to the inside surface of the cylinder bore and to the crankshaft support areas, and by the cylinder axis tilting rearward with respect to the perpendicular.

### Action

According to the first invention, the high temperature side of the cylinders where the auxiliary combustion chambers and exhaust ports are located are cooled by the oncoming air stream as the vehicle moves forward. Furthermore, since the fuel pump is located at the rear of the vehicle, the oncoming air stream is not blocked by the fuel pump.

Further, if the piston undergoes a shaking movement at its top dead point, the direction of the crankshaft rotation is such that a tight seal is maintained between the top of the piston and the cylinder wall surface on the exhaust port side.

According to the second invention, the need to allocate space at the bottom of the engine for oil storage is eliminated, thereby increasing the design freedom for engine mounting with regard to the degree to which the cylinder axis can be tilted.

Further, tilting the cylinders rearward facilitates the flow of oncoming air to the front of the cylinders, over them and farther rearward.

### Example

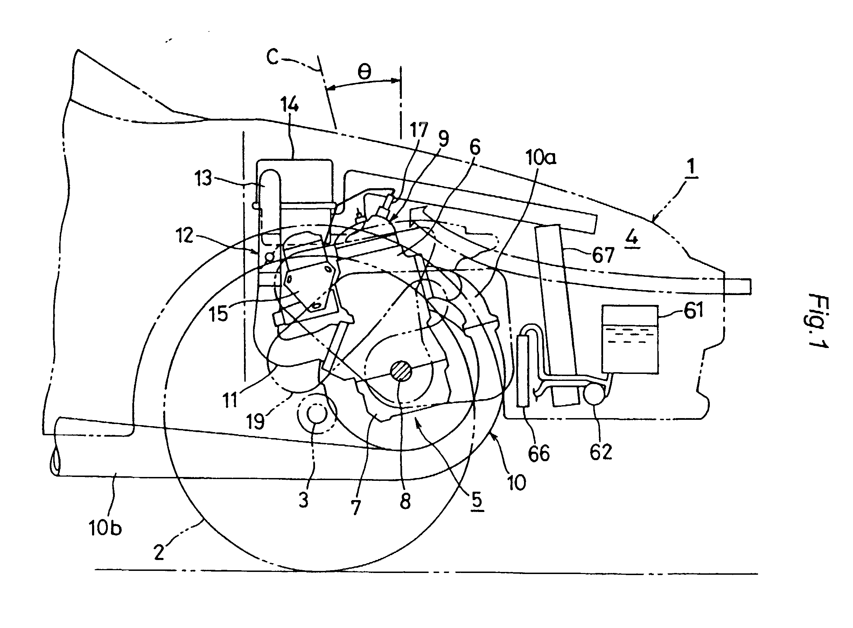

An embodiment of the present invention will be described in detail below with reference to Figures 1 through 10.

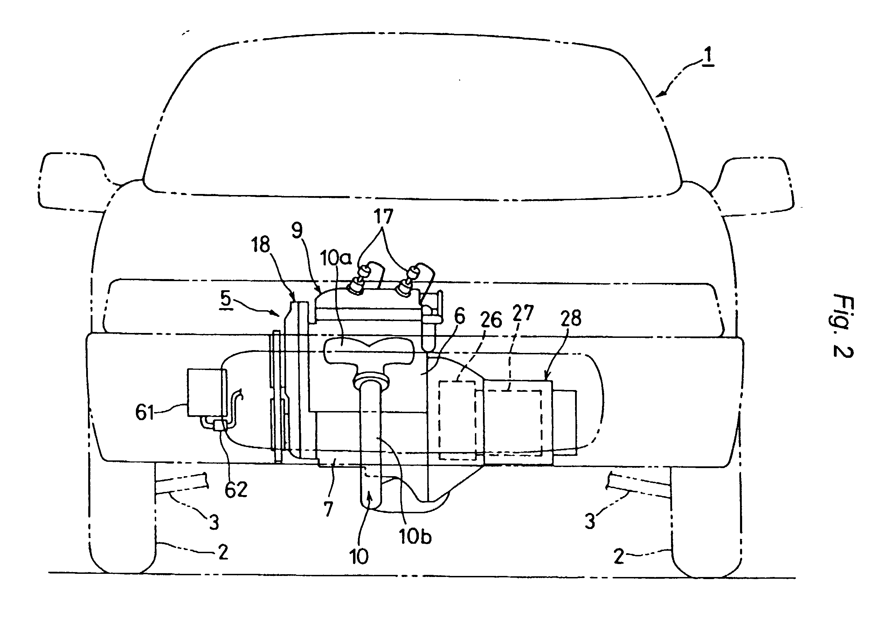

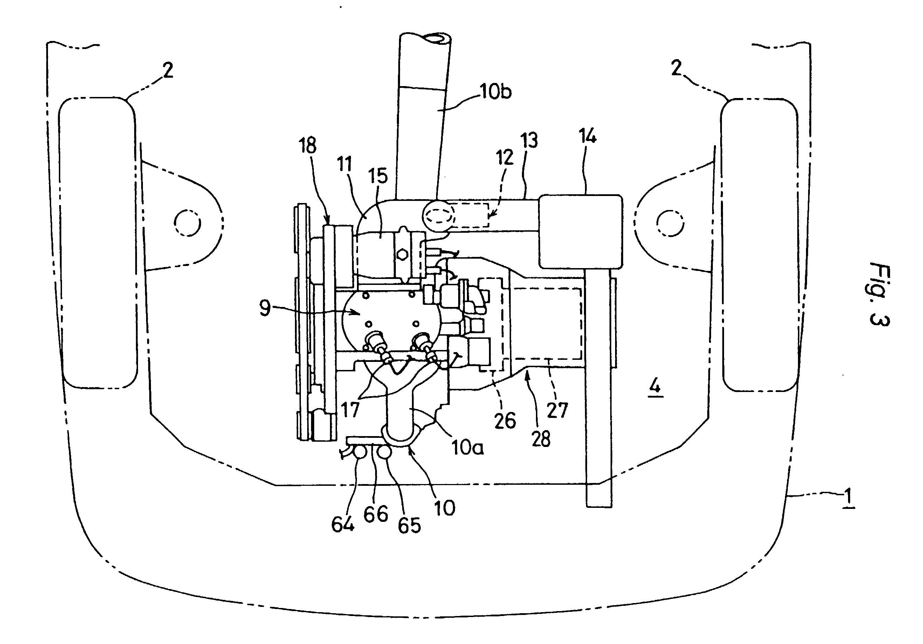

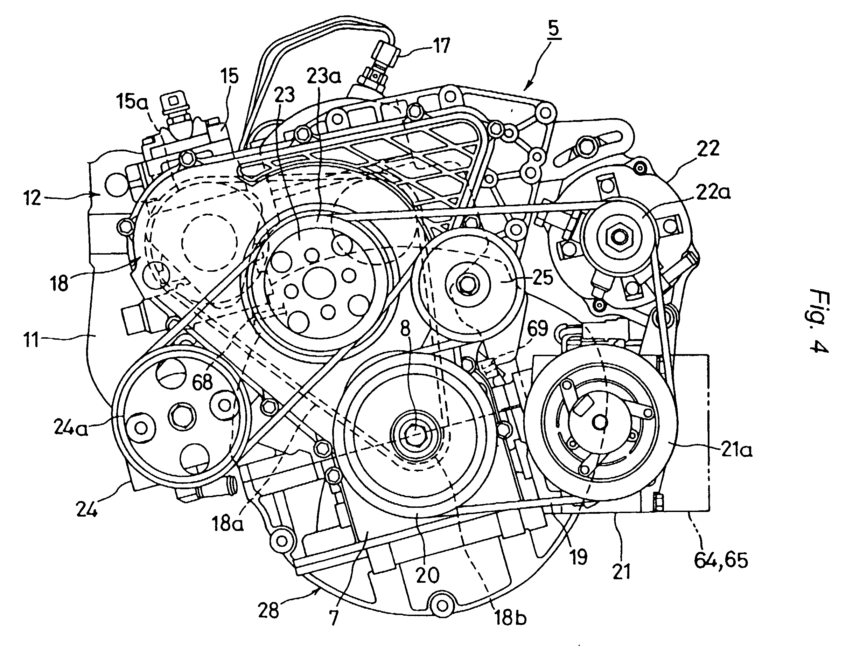

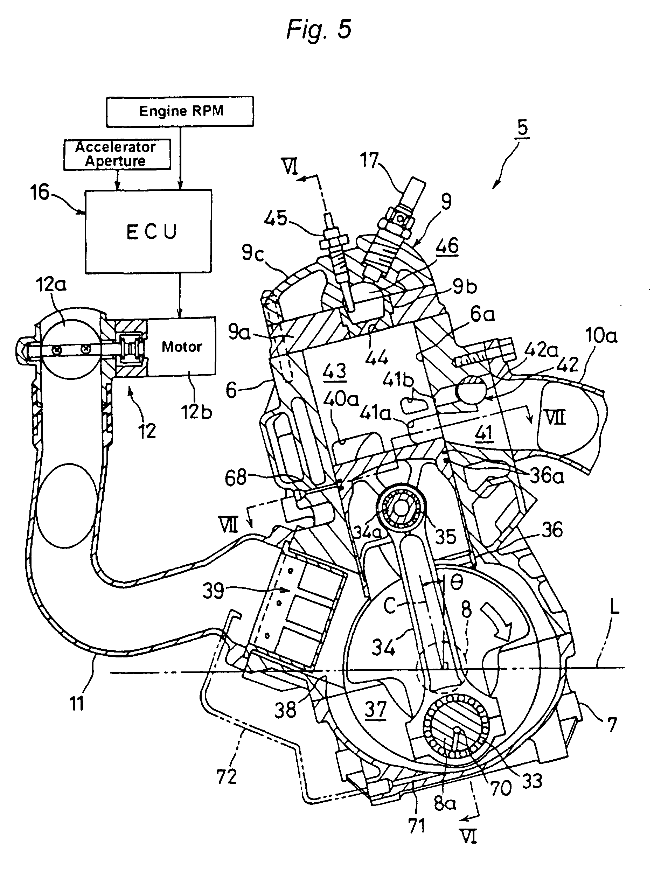

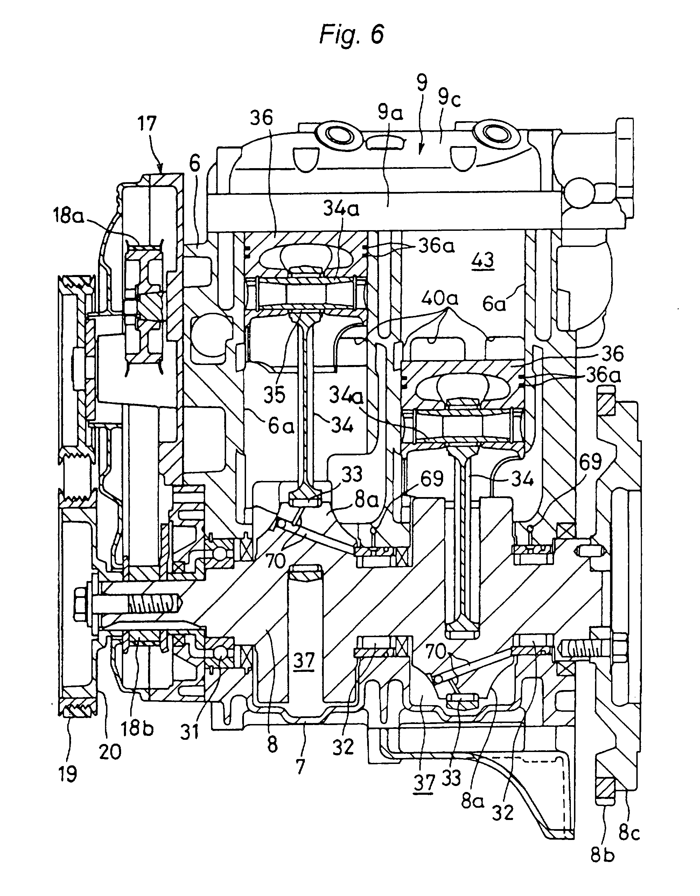

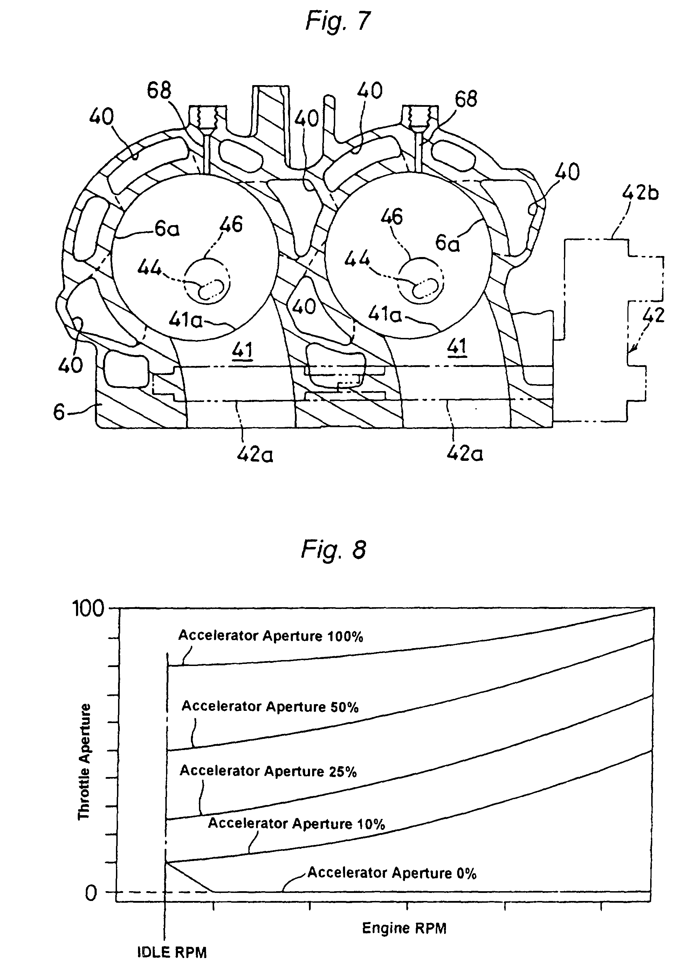

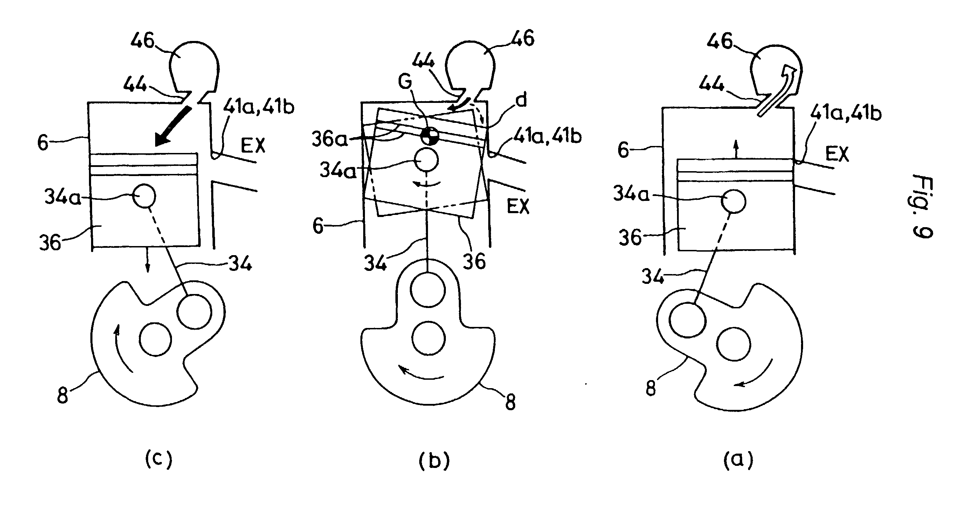

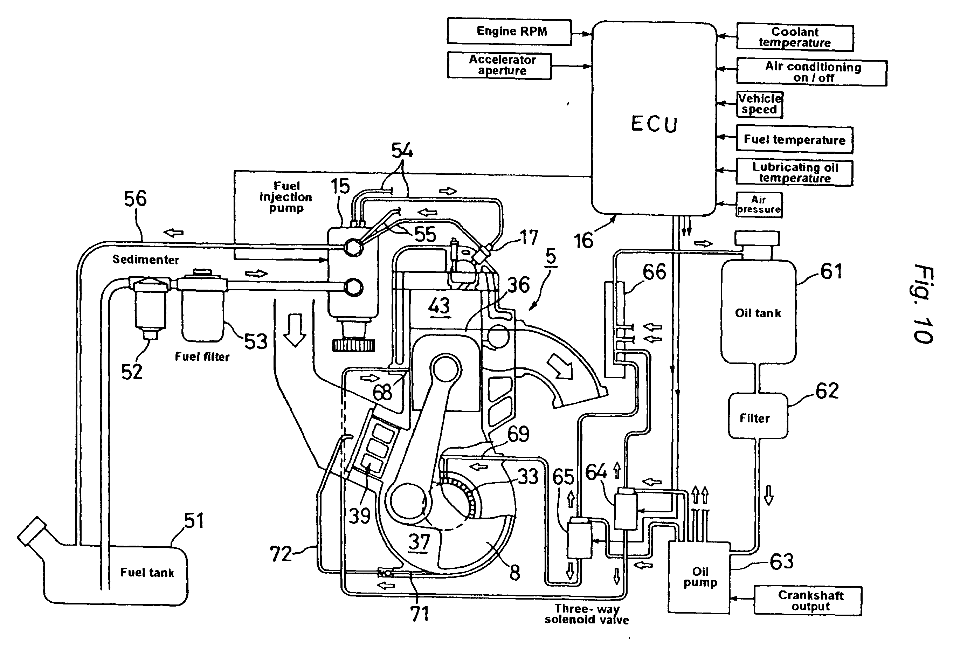

Figure 1 is a side view showing the mounting configuration for two-cycle diesel engines of this invention. Figure 2 is a front view of the same, and Figure 3 is a top view. Figure 4 is a side view showing the vehicle from the left side. Figure 5 is a vertical sectional view of the engine; Figure 6 is a sectional view along line VI-VI of Figure 5 showing the areas other than the cylinder head. Figure 7 is a sectional view of the cylinder block of Figure 5 along line VII-VII. Figure 8 is a graph which can be used as a map to determine the throttle valve aperture. Figure 9 is a diagrammatic view showing the location of the auxiliary combustion chambers on the exhaust side of a two-cycle diesel engine: (a) of that Figure shows the state during the compression stroke, (b) the condition when the piston reaches the top dead point, and (c) the condition during the expansion stroke. Figure 10 is a diagrammatic structural view showing the fuel and oil supply systems.

In the Figures, 1 is a vehicle such as a passenger car, 2 represents the front wheels, and 3 is the axle for the foregoing front wheels 2. At the very front of the foregoing vehicle 1 is an engine room 4 which is designed to facilitate the entry of oncoming air. Mounted inside this engine room 4 is a water-cooled, two-cylinder, two-cycle diesel engine 5 (referred to as "engine" below).

The crankshaft 8 of this engine 5 is tightly located between the cylinder block 6 and the crankcase 7 that is attached beneath it. In addition, the cylinder head 9 is attached to the top of the cylinder block and the engine assembly is mounted in the vehicle in a manner such that the foregoing crankshaft 8 is supported in the transverse direction. Further, as is shown in Figures 1 and 5, the axis C of the cylinders of this engine 5 tilts rearward at an angle θ.

The exhaust pipe 10 is connected to the foregoing cylinder block 6 at the front side of the vehicle, while the air intake manifold 11 connects to the lower rear side. The foregoing exhaust pipe 10 is composed of an exhaust manifold 10a which converges the various exhaust passages at the front of the engine 5, and the exhaust pipe unit 10b which connects to the end of this exhaust manifold 10a. This exhaust pipe unit 10b extends from the front of the engine 5, downward, and then passes rearward, beneath the engine, and further connects to a muffler (not shown).

The foregoing air intake manifold has internal air intake passages that branch to each cylinder, and, connected upstream from the branch are a throttle valve apparatus 12, an air intake pipe 13, and an air cleaner 14. As is shown in Figures 1 and 3, the configuration of the air cleaner 14 allows it to take in air from the front-most area of the vehicle. As shown in Figure 5, the throttle valve apparatus 12 consists of a butterfly throttle valve 12a which is driven by a motor 12b. While the axis of the foregoing throttle valve 12a and motor 12b is shown to extend in the fore-aft direction in Figure 5, in fact, as is shown in Figures 1 and 3, it extends transversely with respect to the vehicle to avoid interfering with the fuel injection pump 15 that will be described below.

The foregoing motor 12b is controlled by an ECU 16 that also controls the amount of fuel injection and the amount of oil supplied to the engine 5. To wit, the motor 12b is driven as a function of the engine RPM as detected by an engine RPM sensor (not shown), of the accelerator aperture as detected by an accelerator aperture detector ( not shown, that detects the degree to which the accelerator pedal has been depressed), and of a reading of the throttle aperture map shown in Figure 8 in a manner whereby the aperture of the foregoing throttle valve 12a is made to match the throttle aperture read from the map.

The map shown in Figure 8 shows the control of the intake air by the throttle valve 12a when the engine 5 is operating in the RPM range from idling to the low load range. Further, when the engine RPM reaches a certain level, due to the greater (or lesser) depression of the accelerator pedal, the throttle valve 12a is opened to a greater (or smaller) degree. Further, even if the depression of the accelerator pedal remains constant, when the engine RPM increases (or decreases) the aperture of the throttle valve 12a increases (or decreases).

To wit, the constriction of the valve in the air intake system is not linked to the movement of the accelerator pedal as it commonly is in the prior art, rather, the configuration is such that all the air intake is supplied to the engine, and in this embodiment, when the engine RPM lies between the idling and low load range, the air intake can be constricted in accordance with the operating state of the engine.

Since such constriction of the air intake causes the combustion gas remaining inside the cylinder to increase, thereby moderating the combustion (lengthening the combustion interval), not only does this design inhibit knocking, but it can reduce NOₓ emissions that result from low combustion temperatures.

The fuel injection pump 15, which lies near the foregoing throttle valve apparatus 12, is driven by the engine 5 to deliver fuel under pressure to the fuel injection valve 17 for each cylinder. The amount of fuel delivered by this fuel injection pump 15 is controlled by the foregoing ECU 16. Further, as shown in Figures 3 and 4, this fuel injection pump 15 is attached to a belt cover 18 shaped like an inverted triangle when viewed from the side and installed at the right end of the engine 5, just to the rear of the cylinder block 6. As is further shown in Figures 4 and 6, the drive structure for this fuel injection pump is composed of an input pulley 15a, located inside the foregoing belt cover 18, which is driven by means of a fuel injection pump drive belt 18a that transmits the rotation of the crankshaft pulley 18b.

Also installed in the belt cover 18 on the right side of the engine is an accessory equipment belt 19 which transmits the drive from the rotation of the crankshaft 8 to the engine's accessory equipment. As is shown in Figure 4, this accessory equipment belt 19 spans the crank pulley 20 attached to the right side end of the crankshaft 8, the pulley 21a of the compressor 21 for the air conditioner, the pulley 22a for the alternator 22, the pulley 23a for the water pump 23, the pulley 24a for the power steering pump 24, and the idler pulley 25.

Further, as shown in Figures 2 and 3, the left side end of the engine 5 is attached to a transmission 28 which is equipped with a clutch mechanism 26 and a gearbox 27.

Next, the internal configuration of the engine will be explained with reference to Figures 5 through 7. The double-dot line L shown in Figure 5 is the horizontal line through which the crankshaft 8 passes when the engine is mounted in the vehicle. As is shown in Figure 6, the crankshaft 8 is rotatably supported in the cylinder block 6 and crankcase 7 by ball bearings 31 and roller bearings 32, and the large ends of two connecting rods 34 are connected to the crank pins 8a for each cylinder through needle bearings 33. Further attached to the crankshaft 8 on the left side of the vehicle is a flywheel 8c having a ring gear 8b that is used by the starter.

The small ends of the foregoing connecting rods 34 are connected to the pistons 36 for each cylinder through the needle bearings 35 and the piston pins 34a. The pistons 36 are slidably inserted into the cylinder bores 6a in the cylinder block 6. 36a indicates the piston rings.

The assembly of the foregoing cylinder block 6 with the foregoing crankshaft 8 and the crankcase 7 causes crank chambers 37 to be formed for each of the cylinders; air intake openings 38 are formed in the lower part of these crank chambers 37 for the introduction of air. The air intake passages inside these air intake openings 38 are equipped with a conventional reed valve apparatus 39.

Also formed in the cylinder block 6 are scavenging passages 40 which link the foregoing crank chambers 37 with the inside of the cylinder bores 6a, and exhaust passages 41. As shown in Figure 7, the foregoing scavenging passages 40 are formed in three directions around the cylinder bore 6a and lead through respective scavenging ports 40a to the inside of the cylinder bores 6a. Further, the upstream ends the exhaust passages 41 connect to the inside of the cylinder bores 6a by means of a single main exhaust port 41a which is positioned slightly higher than the top edge of the foregoing scavenging port 40a, and a pair of auxiliary exhaust ports 41b the openings for which are slightly higher than that of the main exhaust port 41a. The downstream ends of the exhaust passages 41 connect to the exhaust passages inside the foregoing exhaust manifold 10a.

An exhaust control apparatus is mounted in the part of the foregoing exhaust passages which connect to the cylinder bores 6a through the foregoing auxiliary exhaust ports 41b. This exhaust control apparatus can change the exhaust timing and the compression ratio, and it is composed of rod-shaped valve members 42a which are rotatably inserted across the exhaust passage in the cylinder block 6 to cut across the foregoing auxiliary exhaust ports and of a drive mechanism 42b that can rotate this valve member 42a. In addition to there being a valve member having an arc-shaped cross section, formed on the rod 42a for each cylinder, the pair of round rods are linked by a tooth engagement arrangement, and one end of them is connected to a drive mechanism 42. Further, the drive mechanism 42b is connected by a drive shaft (not shown) to the ends of the foregoing valves 42a. When the engine is operating in the idling to low RPM range, a drive motor drives the valve members 42a to the closed position, thereby closing the foregoing auxiliary exhaust ports, and after the engine has reached the mid-range RPM level, as shown in Figure 5, the valve members 42a are opened by the ECU 16 to allow the exhaust gases to be additionally expelled through the foregoing auxiliary exhaust ports.

When the foregoing valve members 42a are in the closed position, the onset timing for compression is speeded up, and the beginning of the exhaust timing is delayed, as compared to when the valves are open, and further, the compression ratio is increased. As a result, closing the valve members 42a makes the engine 5 easier to start and stabilizes the operation in the low load/ low RPM operating range. When the valve members 42a are open, the cross-sectional area of the exhaust passage is thereby increased for high RPM/high load operations; this reduces the exhaust resistance to generate higher engine output.

As is shown in Figure 5, the cylinder head 9 is composed of a lower cylinder head 9a that is attached to the top end of the cylinder block 6, of hot plugs 9b which are shaped approximately like cylinders with a bottom and which are attached in the lower cylinder head 9a, and an upper cylinder head 9c that attaches over the lower cylinder head 9a and the hot plugs 9b, which together compose the top wall of the primary combustion chambers 43 that are formed inside the cylinder bores 6a. The foregoing top and bottom cylinder heads 9a, 9c are formed from aluminum alloy, while the hot plugs 9b are formed from stainless steel.

Formed in the foregoing lower cylinder head 9a are small-diameter and large-diameter retention holes on the exhaust port side (for the main exhaust port 41a and the auxiliary exhaust ports 41b) of the cylinder axis, and the foregoing hot plugs 9b are inserted from the top into these retention holes. Further, the hot plugs 9b, shaped like a cylinder with a bottom, are connected by connecting holes 44 that connects their respective bottoms to the foregoing main combustion chambers 43. These connecting holes 44 are sloped downward to gradually diverge from the exhaust port. There is an approximately semi-spherical concave area formed in the upper cylinder head 9c which lies opposite the hot plug 9b. The foregoing fuel injection valve 17 injects fuel into this concave area, and a glow plug 45 is situated to border on the inside of that concave area.

Further, the combination of the foregoing lower cylinder head 9a and the hot plug 9b, with the hot plug 9b being held in the retention hole of the lower cylinder head 9a, are fastened along with the upper cylinder head 9c to the cylinder block 6. When the cylinder head 9 is fastened in this manner to the cylinder block 6, the main combustion chambers 43 lie inside the cylinder bores, and in addition the flat-bottomed auxiliary combustion chambers 46 are formed -- offset toward the exhaust port side with respect to the cylinder axis -- inside the cylinder head 9 by the cylindrical area of the hot plugs 9b and the foregoing concave areas formed in the upper cylinder head 9c. If the auxiliary combustion chambers were to be regarded as approximately spherical, the foregoing connecting holes 44 would extend tangentially from them.

In an engine 5 having this configuration, air introduced from the crank chamber 37 through the scavenging passage 40 into a main combustion chamber 43, will, during the compression stroke, flow into the auxiliary combustion chamber 46 through the connecting hole 44 to generate a vortex flow of compressed air inside the auxiliary combustion chamber. Then, by injecting fuel from the fuel injection valve 17 into this vortex flow to cause combustion, the high pressure combustion gas is caused to flow from the auxiliary combustion chamber, through the connecting hole 44 and into the main combustion chamber. At this time, due to the relationship of the extended direction of the connection hole 44, the combustion gas flows from the opening into the main combustion chamber toward the side of the cylinder that is opposite, with respect to the cylinder axis, from the main exhaust port 41a and the auxiliary exhaust ports 41b. This design prevents the combustion gas from blowing directly against the exhaust port.

In the case, as described above, where the combustion gas is injected from an auxiliary combustion chamber 46 which is shifted toward the exhaust port side of the cylinder toward the side of the cylinder opposite the exhaust port, then, depending upon the direction of the rotation of the crankshaft 8, the piston 36 can undergo shaking movement at the top dead point which might allow the invasion of the combustion gas into to the piston ring area, but in this embodiment, since the crankshaft 8 rotates to the right as shown in Figure 5, this problem is resolved. An explanation of this feature will be provided with reference to Figures 9(a) through (c).

Figure 9(a) shows the compression stroke, Figure 9(b) the piston at the top dead point and Figure 9(c) the expansion stroke. In the Figure, parts that are the same as or similar to those described for the foregoing Figures 1 through 8 bear the same reference numbers, and further explanation of them will be omitted. In order to make the rotational movement of the piston easier to understand, the gap between the piston and the cylinder wall surface has been exaggerated.

It is known that the reciprocal movement of the piston 36 is accompanied by a rotational movement around the piston pin 34a. To wit, when the rotational movement of the crankshaft 8 is to the right as shown in the Figure, during the compression stroke shown in (a), the sideways pressure by the connecting rod 34 causes the piston 36 to rise while being pressed toward the exhaust side. Then, as shown by (b) of that Figure, when the piston 36 reaches the upper dead point, the change in the tilt angle of the connecting rod causes the pressure to the piston 36 to shift to the other side, with respect to the cylinder axis.

At this time, the center of gravity of the piston 36 (indicated by G in the Figure) being above the piston pin 34, causes the relatively lightweight bottom part of the piston 36 to move to the side opposite the exhaust port based upon the foregoing change in the side pressure. In other words, the movement by the relatively heavier crown of the piston is more delayed. As a result, at the top dead point, the piston rotates around the piston pin 34, to cause a shaking movement that causes the crown of the piston to be lower on the exhaust side.

After that, as shown in (c) of the Figure, during the expansion stroke, the piston descends while pressed toward the exhaust side.

When the piston 36 undergoes shaking movement at its top dead point and tilts as shown in (b) of Figure 9, and as described above, since the top of the piston remains in close contact with the cylinder wall surface on the exhaust port side, it is possible to avoid the exposure of the piston ring to the portion of the combustion gas being blown out from the connection hole 44. If, for example, the crankshaft 8 were to rotate in a direction opposite from that described for this embodiment, then the piston 36, as indicated by the double-dot line in (b) of the Figure, would undergo a shaking motion in the opposite direction, thereby creating a gap on the exhaust port side. To wit, as is shown by the double-dot line in Figure 9 (b), the crown surface of the piston 36 would rise high on the exhaust port side and create a gap between the top of the piston and the cylinder wall on the exhaust port side, thereby allowing the combustion gas to invade the gap as shown by the broken-line-arrow in the Figure. When combustion gas enters this gap, it causes carbon deposits on the outside circumferential groove in the piston 36 and on the piston ring 36a.

The fuel supply system and the oil supply system of the engine 5 are structured as shown in Figure 10. The fuel supply system supplies fuel from the fuel tank 51, through a sedimenter 52 and fuel filter 53, to the fuel injection pump 15, and from the fuel injection pump 15 through the fuel line 54 to the fuel injection valves 17 for each cylinder. Excess fuei is returned to the fuel tank 51 by means of the return lines 55, 56.

The structure of the oil supply system is such that oil is supplied from the oil tank 61 through the filter 62 to the oil pump 63, and then, from this oil pump 63 through three-way solenoid valves 64, 65 to the cylindrical wall surfaces and the crankshaft support areas of the engine 5. The oil returning from the three-way solenoid valves is collected in the oil return rail 66, from where it is fed back to the oil tank 61.

The foregoing oil pump 63 is a mechanically driven four-outlet pump which is attached to the front side of the crankcase; it is connected to the crankshaft 8 through a gear not shown in the Figures. The oil tank 61 and filter 62 are located in close proximity to the oil pump 63 in the front of the vehicle as shown by Figures 1 and 2. In Figure 1, the reference number 67 indicates the radiator which is situated rearward of the oil tank 61 in the vehicle.

The foregoing three-way solenoid valves 64, 65 are switching valves which can switch the oil delivered to their oil inlets to the oil supply opening or the oil return opening. Their switching is controlled by the foregoing ECU 16. The oil supply opening of the three way solenoid valve 64 is connected with the cylinder wall lubrication holes 68 formed in the cylinder block 6, while the oil supply opening of the three way solenoid valve 65 is connected with the crankshaft support area lubricating holes 69 that are formed in the cylinder block 6. The oil return openings of both three way solenoid valves 64, 65 are connected to the foregoing oil return rail 66. These three-way solenoid valves 64, 65 are allocated as one set per each cylinder, and, as shown in Figure 4, are attached to the compressor 21 for the air conditioner.

At this point, the method used to control the switching of the three-way solenoid valves 64, 65 will be explained. Based upon the engine RPM signal detected by an engine RPM detection sensor and an accelerator aperture signal detected by an accelerator aperture detector that are not shown in the Figures, the ECU 16 determines the oil consumption requirements for the various lubrication points for each revolution of the engine. It integrates these oil consumption amounts for each engine revolution, and when the integrated value reaches a preset value, it switches the oil supply openings of the three-way solenoid valves to the discharge position, causing the oil to be supplied from both valves to the areas to be lubricated. Prior to the integrated value reaching the foregoing set value, both valves pass the oil from the oil return openings to the oil return rail 66, to return it to the oil tank 61.

When the oil has been made to flow through the oil supply openings for a predetermined period of time, as described above, the three-way solenoid valves 64, 65 are switched from the oil return opening back to oil discharge, and then the amount of oil consumption is determined anew as described above, and the foregoing action is repeated.

To wit, this lubrication device supplies an appropriate amount of oil to the parts to be lubricated in accordance with the operating state of the engine. The control by the ECU 16 of the foregoing three-way solenoid valves and the control of the fuel injection pump 15 can be fine-tuned based upon further consideration of such factors as the engine coolant temperature, whether the air conditioner is ON or OFF, the vehicle speed, the fuel temperature, the lubricating oil temperature, air pressure, etc.

As is shown in Figures 4 and 5, the foregoing cylinder wall surface lubricating holes 68 issue in the rear surface of the cylinder block 6 at their upstream ends. The downstream ends of the cylinder wall surface lubrication holes 68 issue into the area between the piston rings 36a of the piston 36 when latter is positioned at its bottom dead point. As is shown in Figures 4, 6 and 10, the upstream ends of the foregoing crankshaft support area lubricating holes 69 issue into the front wall of the cylinder block 6 above the roller bearings 32 that support the crankshaft; their downstream ends issue into the top wall surface of the roller bearing attachment area. As is shown in Figure 6, the needle bearings 33 that support the connecting rods have oil introduction holes 70 whereby the pressurized oil sent to the foregoing roller bearings 32 is sent through the holes by centrifugal force.

Further, the structure of this lubrication apparatus is such that the various devices comprising it are mounted successively higher in the following order: the foregoing oil pump 63, the oil supply openings of the three-way solenoid valves 64, 65, and the position of the foregoing oil holes 68, 69. As a result, any oil remaining within the oil supply system when the engine is stopped does not flow out to the parts to be lubricated, and moreover, after initiation of the oil supply, air is unlikely to remain within the system.

Oil collects in the bottom of the crankcase 7, however this oil, due to the pressure difference between the crank chamber 37 and the air intake manifold, is returned to the air intake manifold 11. To wit, as is shown in Figures 5 and 10, oil outlet holes 71 are present in the bottom of the crankcase 7, and these oil outlet holes 71 connect to the inside of the of the air intake manifold through an oil return hose 72.

The two-cycle diesel engine 5 with the above described configuration is started by means of a starter (not shown) rotating the crankshaft 8. When the crankshaft is rotated, the air moves from the air cleaner 14 → air intake pipe 13 → throttle valve apparatus 12 → air intake manifold 11 → reed valve apparatus 39, to enter the crank chamber 37, where that air is compressed and sent through the scavenging passages 40 and the scavenging ports 40a to the main combustion chamber 43.

Then, during the compression stroke, the air inside the main combustion chamber 43 passes through the connecting hole 44 to the auxiliary combustion chamber 46 where a vortex flow is generated inside the auxiliary combustion chamber, and where fuel is injected into the vortex flow by the fuel injection valve to cause ignition. After that, the combustion gas passes through the connection hole 44 to the main combustion chamber 43 where it is blown out toward the exhaust port which is the opposite side with respect to the cylinder axis; the rising pressure in the main combustion chamber then causes the piston 36 to descend.

During the expansion stroke, the movement of the piston 36 to a position below the top edge of the main exhaust port 41a and the auxiliary exhaust ports 41b allows the combustion gas to pass from the main combustion chamber 43 through the exhaust passage 41 to be expelled through the exhaust pipe 10.

Thus, when the engine 5 is started in this manner, the auxiliary combustion chambers 46, being situated on the exhaust side relative to the cylinder axis, cause the temperature of the exhaust side to rise, thereby creating an a distribution of heat across the cylinder. However, since the exhaust side of this engine faces forward in the vehicle with engine being mounted to support the crankshaft 8 transversely with respect to the vehicle, the oncoming air entering the engine room space the vehicle is running strikes the high temperature area of the cylinder, causing it to be cooled. At this time, the flow of oncoming air is shown by the double-dashed-line arrow in Figure 1.

Also, since the fuel injection pump 15 is located behind the cylinders, the fuel injection pump 15 does not block the incoming air flow. In addition, since the auxiliary combustion chambers are positioned toward the front side of the vehicle with respect to the cylinder axis, there is more space between the fuel injection valve and the fuel injection pump 15 to facilitate their location and to simplify the assembly of the fuel lines and return lines that connect them.

Further, since the configuration is such that an optimal amount of oil is pumped by the oil pump 63 from the oil tank 61 to the inside walls of the cylinders and the crankshaft support areas, and because the axis C of the cylinders tilts rearward, it is possible to decrease the vertical dimensions of the engine 5 and to facilitate the rearward flow of the incoming air after it hits the cylinders on the front end of the vehicle.

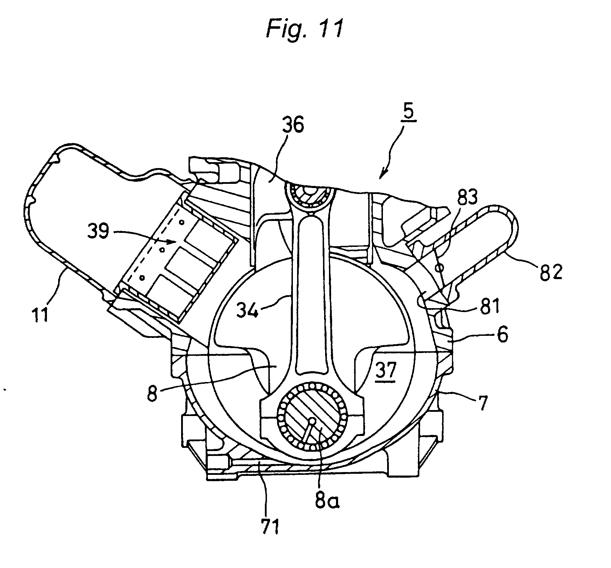

While the present embodiment presented an example where a throttle valve apparatus 12 was used to reduce the amount of intake air during engine idling or operations under low and mid-range loads, the same effects could be obtained by eliminating the throttle valve apparatus 12 in favor of a structure that lowered the pressure in the crank chambers 37. This configuration will be explained with reference to Figure 11.

Figure 11 is a sectional view of an embodiment that reduces the amount of intake air by reducing the pressure in the crank chambers. In the Figure, parts that are identical or similar to those described in the foregoing Figures 1 - 10 bear the same references numbers, and further explanation of them will be omitted. In Figure 11, there is a passage hole 81 in the lower front side of the cylinder block 6 in the area that corresponds to the crank chamber 37, and this passage hole is covered on the outside from the front of the vehicle by a scavenging chamber 82. Further, there is a scavenging control valve 83, which is a butterfly valve, attached over the inlet (the opening on the side of the passage hole 81) of the scavenging chamber 82.

Just as for the throttle valve apparatus 12 described in the previous embodiment, this scavenging control valve is motor-driven and opened and closed by control of the ECU. To wit, when the engine is idling or operating in the low to mid-range load operating range, the scavenging valve is opened, and when the engine is operating in the high load range it is closed. The aperture of the scavenging control valve 83 is controlled based upon the engine operating state using an aperture map, just as is the foregoing throttle valve apparatus.

When the foregoing scavenging control valve 83 is open, the volume of the crank chamber 37 is effectively increased, thereby causing the pressure of the crank chamber 37, to wit, the scavenging pressure, to decrease, resulting in an increase in EGR and a decrease in combustion temperature. This feature, in addition to reducing NOₓ emissions in the exhaust gases, serves to minimize knocking sounds by dampening combustion. Further, when the scavenging control valve 83 is closed, the crank chamber assumes its normal volume to increase the primary compression and perform ample scavenging.

### Effects of the Inventions

As explained above with regard to the two-cycle diesel engine mounting configuration according to the first invention, for two-cycle diesel engines having vortex auxiliary combustion chambers, these auxiliary combustion chambers are located on the exhaust side with respect to the cylinder axis, and further, the connecting holes that connect the auxiliary combustion chambers with the main combustion chambers have axes that slope toward the side of the cylinder opposite the exhaust port, and moreover, the direction of rotation of the crankshaft is such that during the expansion stroke, the piston is pressed against the side opposite the foregoing exhaust port side of the cylinder, the engine being mounted in the vehicle with the foregoing exhaust side facing forward so that the high temperature side of the cylinder is cooled by incoming air as the vehicle moves forward. In addition, the fuel pump is located behind the cylinder, thereby preventing it from blocking the incoming air flow.

This configuration allows approximately uniform heat distribution in the cylinder, thereby effectively preventing its deformation due to heat stress.

Further, when the piston undergoes shaking movement when it reaches its top dead point, the direction of rotation of the crankshaft is such that the top of the piston remains in tight contact with the cylindrical wall surface on the exhaust side. Accordingly, because the axis of the connecting hole from the auxiliary combustion chamber is directed toward the side of the cylinder opposite the exhaust port, the invasion of combustion gas to the piston ring area on the exhaust port side is thereby inhibited.

Compared with the mounting configuration for two-cycle diesel engines of the first invention, the vehicle mounting configuration for two-cycle diesel engines according to the second invention additionally has a configuration that delivers oil from the oil tank using an oil pump in optimal amounts to the lubrication points in the cylinder walls and on the crankshaft support areas. As a result, there is more freedom in tilting the cylinder axis in mounting the engine, making it possible to tilt the cylinder axis rearward from the perpendicular, toward the back of the vehicle.

This tilting rearward of the cylinder axis makes it possible to shorten the height dimension of the engine in the perpendicular direction, allowing lowering the overall height of the front part of the engine.

Furthermore, the tilting of the cylinders rearward has the additional advantage of facilitating the flow of oncoming air, which arises from the vehicle motion, that strikes the front side of the cylinder, and flows over the cylinder and rearward.

### A Brief Explanation of the Figures

**Figure 1** A side view of the mounting configuration for a two-cycle diesel engine according to this invention.
**Figure 2** A front view of the mounting configuration for a two-cycle diesel engine according to this invention.
**Figure 3** A top view of the mounting configuration for a two-cycle diesel engine according to this invention.
**Figure 4** A view of the engine from the left side of the vehicle.
**Figure 5** A vertical sectional view of the engine.
**Figure 6** A sectional view of areas other than the cylinder head, along line VI-VI of Figure 5.
**Figure 7** A sectional view of the cylinder block along lines VII-VII of Figure 5.
**Figure 8** A graph usable as a map for determining the throttle valve aperture.
**Figure 9** A diagram of the configuration of the two-cycle engine according to this invention with Figure (a) showing the state during the compression stroke, Figure (b) showing the state when the piston is at the top dead point, and Figure (c) showing the state during the expansion stroke.
**Figure 10** A diagrammatic view of the fuel supply system and oil supply system.
**Figure 11** A sectional view showing an embodiment that reduces the amount of air intake by reducing the pressure in the crank chamber.

### Explanation of the Reference Numbers:

- 1: Vehicle
- 5: Two-cycle diesel engine
- 6: Cylinder block
- 7: Crankcase
- 8: Crankshaft
- 11: Air intake manifold
- 15: Fuel injection pump
- 36: Piston
- 41a: Main exhaust port
- 41b: Auxiliary exhaust ports
- 43: Main combustion chamber
- 44: Connecting hole
- 46: Auxiliary combustion chamber
- 61: Oil tank
- 63: Oil pump
- 64,65: Three-way solenoid valves
- C: Cylinder axis

## Claims

1. A vehicle mounting configuration for two-cycle diesel engines having a vortex auxiliary combustion chamber (46), which is **characterized by** the vehicle mounting configuration for two-cycle engines, wherein each of the foregoing vortex auxiliary combustion chambers (46) is located on the exhaust side with respect to the cylinder axis (C) of the cylinder; by the connecting hole (44) between this auxiliary combustion chamber (46) and the main combustion chamber (43) being formed so that its axis is directed toward the side opposite the exhaust port (41a); and moreover, during the expansion stroke, by the direction of rotation of the crankshaft (8) being such that force is exerted on the piston (36) toward the side opposite the foregoing exhaust port (41a) with respect to the cylinder axis (C), wherein this engine is mounted, with its crankshaft (8) oriented transversely, in the front of a vehicle with the foregoing exhaust side facing the front of the vehicle, and the fuel pump (15), which supplies fuel to the foregoing auxiliary combustion chamber (46) being located to the rear of the cylinder.

2. The vehicle mounting configuration for two-cycle diesel engines according to Claim 1 which is **characterized by** an amount of oil depending upon the operating state of the engine being supplied under pressure from the oil tank (61) by an oil pump (63) to the inside surface of the cylinder bores and to the crankshaft support areas, and by the cylinder axis (C) tilting rearward with respect to the perpendicular.

## Patentansprüche

1. Fahrzeugmontageanordnung für Zweitakt- Dieselmotoren, die eine Wirbel- Hilfsbrennkammer (46) haben, die **gekennzeichnet ist, durch** die Fahrzeugmontageanordnung für Zweitaktmotoren, wobei jede dieser Wirbel- Hilfsbrennkammem (46) auf der Auslassseite in Bezug zu der Zylinderachse (C) des Zylinders angeordnet ist; **durch** die Verbindungsbohrung (44), die zwischen dieser Hilfsbrennkammer (46) und der Hauptbrennkammer (43) so gebildet ist, so dass ihre Achse in Richtung zu der Seite gerichtet ist, die der Auslassöffnung (41a) gegenüberliegt, und, überdies, während des Ausdehnungshubes, **durch** die Drehrichtung der Kurbelwelle (8), die derart gerichtet ist, dass die Kraft auf den Kolben (36) in Richtung zu der der vorerwähnten Auslassöffnung (41a) gegenüberliegenden Seite in Bezug zu der Zylinderachse (C) ausgeübt wird, wobei dieser Motor, mit seiner Kurbelwelle (8) quer orientiert, in der Vorderseite eines Fahrzeuges montiert ist, wobei die vorerwähnte Auslassseite der Vorderseite des Fahrzeuges zugewandt ist, und die Kraftstoffpumpe (15), die zu der vorerwähnten Hilfsbrennkammer (46), die an der Rückseite des Zylinders angeordnet ist, Kraftstoff zuführt.

2. Fahrzeugmontageanordnung für Zweitakt- Dieselmotoren nach Anspruch 1, die **gekennzeichnet ist durch** eine Ölmenge, die von dem Betriebszustand des Motors abhängt, die unter Druck aus dem Ölbehälter (61) **durch** eine Ölpumpe (63) an die Innenoberfläche der Zylinderbohrungen und an die Kurbelwellen- Lagerbereiche zugeführt wird, und **dadurch**, dass die Zylinderachse (C) in Bezug zu der Senkrechten nach rückwärts geneigt ist.

## Revendications

1. Configuration de montage de véhicule pour des moteurs Diesel à deux temps ayant une chambre de combustion auxiliaire à tourbillon (46), **caractérisée par** la configuration de montage de véhicule pour des moteurs à deux temps, dans laquelle chacune des chambres de combustion auxiliaires à tourbillon précédentes (46) est positionnée sur le côté d'échappement par rapport à l'axe de cylindre (C) du cylindre, par le trou de connexion (44) entre cette chambre de combustion auxiliaire (46) et la chambre de combustion principale (43) qui est formé de sorte que son axe est dirigé vers le côté opposé à l'orifice d'échappement (41a) et de plus, pendant la course d'expansion, par la direction de rotation du vilebrequin (8) qui est telle qu'une force est exercée sur le piston (36) en direction du côté opposé à l'orifice d'échappement précédent (41a) par rapport à l'axe de cylindre (C), dans laquelle ce moteur est monté, en ayant son vilebrequin (8) orienté transversalement, à l'avant d'un véhicule avec le côté d'échappement précédent dirigé vers l'avant du véhicule, et la pompe à carburant (15) qui alimente en carburant la chambre de combustion auxiliaire précédente (46) qui est positionnée à l'arrière du cylindre.

2. Configuration de montage de véhicule pour des moteurs Diesel à deux temps selon la revendication 1, **caractérisée par** une quantité d'huile, fonction de l'état de fonctionnement du moteur, qui est alimentée à partir du réservoir d'huile (61), par une pompe à huile (63), vers la surface intérieure des alésages de cylindre et vers les zones de support de vilebrequin, et par l'axe de cylindre (C) qui s'incline vers l'arrière par rapport à la perpendiculaire.
